# EUROPÄISCHE PATENTSCHRIFT

(11) **EP 2 608 983 B1**
(45) Veröffentlichungstag und Bekanntmachung des Hinweises auf die Patenterteilung: **16.04.2014**
(21) Anmeldenummer: 11751860.5
(22) Anmeldetag: 24.08.2011
(51) Int. Cl.: B60N 2/06, B60N 2/08

(54) **VERSTELLVORRICHTUNG, INSBESONDERE FÜR EINEN FAHRZEUGSITZ**
ADJUSTING MECHANISM, PREFERABLY FOR A VEHICLE SEAT
DISPOSITIF DE REGLAGE, EN PARTICULIER POUR UN SIÈGE DE VÉHICULE

(30) Priorität: 26.08.2010 DE 102010035430
(43) Veröffentlichungstag der Anmeldung: 03.07.2013
(73) Patentinhaber: Johnson Controls GmbH, 51399 Burscheid (DE)
(72) Erfinder: NIEHUES, Andreas, 40764 Langenfeld (DE); HUDCOVSKY, Marian, 01854 Slavnica (SK)
(74) Vertreter: Finger, Catrin
(86) Internationale Anmeldenummer: PCT/EP2011/064572
(87) Internationale Veröffentlichungsnummer: WO 2012/025570

(56) Entgegenhaltungen:
- DE-A1-102006 039 505
- US-A- 3 672 625

## Beschreibung

Die Erfindung betrifft eine Verstellvorrichtung, insbesondere für Fahrzeugsitze mit einem Führungselement zur Führung eines Hebelelements, wobei das Führungselement mit einer Trägerschiene formschlüssig in Kontakt steht. Des Weiteren betrifft die Erfindung einen Fahrzeugsitz mit einer solchen Verstellvorrichtung und ein Verfahren zur Herstellung eines Fahrzeugsitzes.

Fahrzeugsitze umfassen meist einen manuell oder elektrisch zu betreibenden Längsverstellmechanismus, der den Sitz mittels Aussparungen und dazugehörigen Sperrelementen auf jeweils parallel angeordneten, ineinander greifenden Schienenpaaren fixiert. Hierbei können die Schienenpaare ein offenes oder geschlossenes Profil aufweisen (z.B. DE 3631810A, DE 4007857A, EP-A2-0260074) und sind zum einen am Fahrzeugsitz, zum anderen am Fahrzeugboden bzw. einer Grundplatte fixiert.

Häufig werden bei solcherart Verstellmechanismen Hebel oder Führungselemente in Trägerschienen verschiebbar geführt und variabel arretierbar fixiert. Dabei kann es insbesondere beim Entriegelungsvorgang zu unerwünschten Geräuschentwicklungen kommen.

Aus der DE 10 2006 039 505 A1 ist ein manuell längsverstellbarer Kraftfahrzeugsitz bekannt. Der Kraftfahrzeugsitz umfasst ein beidseitig angeordnetes Schienenpaar, bestehend aus jeweils einer karosseriefesten Unterschiene und einer darin längsverschiebbaren, sitzteilfesten Oberschiene, die durch Arretiermittel an der Unterschiene festlegbar ist, wobei die Arretiermittel durch ein Entriegelungsmittel betätigbar sind. Das Entriegelungsmittel ist über ein Lagermittel schwenkbar mit einem Entriegelungshebel verbundenen, der drehfest auf einer Entriegelungswelle sitzt, deren Enden drehbar in von den Oberschienen aufragenden Konsolen gelagert sind. Das Entriegelungsmittel ist durch Einstecken seines Lagermittels in ein an einem Ende eines in Verriegelungsrichtung vorgespannten Haltehebels angeordnetes Lagerauge an den Schienenpaaren vormontiert, wobei der Haltehebel mit seinem anderen Ende schwenkbar an der Konsole gelagert ist.

Weiterhin ist aus der US 3,672,625 eine Vorrichtung zur Lokalisierung für einen einstellbaren Kraftfahrzeugsitz bekannt.

Aufgabe der vorliegenden Erfindung ist es, eine Verstellvorrichtung für einen Fahrzeugsitz mit verbesserten Eigenschaften hinsichtlich einer möglichst geräuscharmen Bedienung, insbesondere während eines Verstellvorganges, z.B. bei der Adjustierung der Längsausrichtung eines Fahrzeugsitzes, anzugeben. Des Weiteren ist ein Fahrzeugsitz mit einer verbesserten Verstellvorrichtung anzugeben.

Diese Aufgabe wird erfindungsgemäß durch die Merkmale des Anspruchs 1 gelöst. Hinsichtlich des Fahrzeugsitzes wird die Aufgabe durch die Merkmale des Anspruchs 5 gelöst.

Vorteilhafte Weiterbildungen der Erfindung sind Gegenstand der Unteransprüche.

Die Verstellvorrichtung weist ein mit einer Trägerschiene formschlüssig in Kontakt stehendes Führungselement zur Führung eines Hebelelements auf. Erfindungsgemäß weist zumindest ein Kontaktbereich des Führungselements zumindest teilweise eine profilierte Fase auf.

Unter einem Hebelelement wird im Sinne der Erfindung auch eine Stange, Schiene oder ein ähnliches Bauteil verstanden, welches an der Trägerschiene drehbar angeordnet ist und an zumindest einem Ende in das Führungselement eingreift.

Die erfindungsgemäße Verstellvorrichtung ist durch die Reduktion der Auflagefläche an der Trägerschiene nicht nur Material sparend in der Fertigung, sondern erlaubt auch aufgrund der damit einhergehenden Verminderung des Reibungswiderstandes eine besonders leichte Entriegelung zur Verstellung z. B. des Fahrzeugsitzes bei gleichzeitig erheblich verminderter Geräuschentwicklung.

Darüber hinaus bewirkt die profilierte Fase auf dem Führungselement eine höhere Fertigungstoleranz für das zu führende Bauteil der erfindungsgemäßen Verstellvorrichtung, ohne dass die Vorrichtung dabei die vorgenannten vorteilhaften Eigenschaften einbüßt.

Weiterhin ist die profilierte Fase mit einem Wellenprofil versehen. Eine solche wellenförmig profilierte Fase ist einfach herstellbar und dient der weiteren Reduzierung der Auflagefläche zwischen dem Führungselement und der Trägerschiene. Beispielsweise kann das Führungselement als ein Formteil ausgeführt sein, in welches das Wellenprofil eingeformt ist.

Zweckmäßigerweise ist der angefaste und profilierte Kontaktbereich an einer der Trägerschiene zugewandten Seite des Führungselements ausgebildet. Eine mögliche Ausführungsform sieht vor, dass der Kontaktbereich an einem Rand einer Aussparung des Führungselements ausgebildet ist.

In einer bevorzugten Ausführungsform der Erfindung wird das Führungselement aus Materialien gefertigt bzw. mit Materialien beschichtet, die zur Gruppe der thermoplastischen Elastomere zählen, insbesondere solchen, die ausgewählt sind aus der Gruppe bestehend aus Copolyester Elastomeren (COPE) (z.B. Arnitel™ (DSM), Skypel™ (SK Chemical), Keyflex BT™ (LG Chemical), thermoplastischen Elastomeren auf Urethanbasis (TPE-U) (z. B, Skythane™ oder Estane™), vernetzten thermoplastischen Elastomeren auf Olefinbasis (TPE-V) (z.B. Sarlink™ (DSM)) und Styrol-Blockcopolymeren (TPE-S) (z.B. MultiFlex™ (Multibase)), besonders bevorzugt Arnitel™ (DSM), Skypel™ (SK Chemical), Keyflex BT™ (LG Chemical), , Skythane™, Estane™, oder Sarlink™ (DSM)). Alternativ sind auch dem Fachmann geläufige Materialien mit ähnlichen physikalisch-chemischen Eigenschaften einsetzbar oder z.B. solche auf natürlicher Kautschukbasis.

Die weiteren Elemente der erfindungsgemäßen Verstellvorrichtung sind aus dem Fachmann geläufigen, im Fahrzeugbau üblichen Materialien gefertigt.

Als Fahrzeugsitz im Sinne der Erfindung sind neben Einzelsitzen auch Sitzbänke oder dergleichen vorstellbar.

Anhand der beigefügten schematischen Figuren werden die Ausführungsbeispiele der Erfindung näher erläutert. Dabei zeigen:
- Fig. 1: schematisch eine Verstellvorrichtung für einen Fahrzeugsitz mit einer Trägerschiene und einem an dieser formschlüssig angeordneten Führungselement, in dem ein Hebelelement eingeführt ist,
- Fig. 2: schematisch eine perspektivische Darstellung des Führungselementes mit einer profilierten Fase, und
- Fig. 3: schematisch einen Längsschnitt durch das Führungselement gemäß Figur 2.

Einander entsprechende Teile sind in allen Figuren mit den gleichen Bezugszeichen versehen.

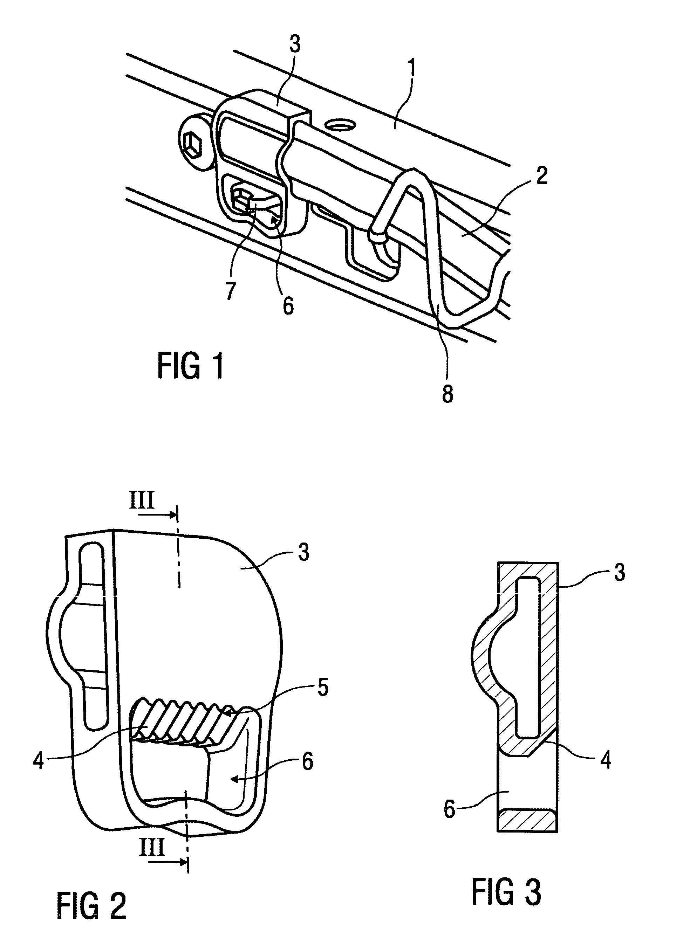

In Figur 1 ist ein Ausschnitt einer Verstellvorrichtung, insbesondere eines Längsverstellmechanismus für einen nicht näher dargestellten Fahrzeugsitz in modularer Bauweise gezeigt. Die Verstellvorrichtung umfasst eine Trägerschiene 1 und ein Hebelelement 2, die der Verstellung des Fahrzeugssitzes dienen. Hierzu ist das Hebelelement 2 um eine Drehachse drehbar an der Trägerschiene 1 angeordnet. Das Hebelelement 2 kann ein Hebelarm, eine Schiene oder ein derartiges Bauteil sein.

Zur Führung des Hebelelements 2 weist dieses zumindest an einem Ende ein Führungselement 3 auf. Dabei ist das Führungselement 3 an demjenigen Ende des Hebelelements 2 angeordnet, an welchem die Drehachse des Hebelelements 2 ausgebildet ist.

Das Hebelelement 2 verläuft parallel zur Trägerschiene 1 und ist stirnseitig in einer Öffnung des Führungselements 3 eingeführt und dort form-, kraftund/oder stoffschlüssig gehalten.

Die Trägerschiene 1 weist darüber hinaus eine Aussparung 6 auf, in welche ein Verbindungselement 7, einer nicht näher dargestellten Verriegelungseinheit für den Verstellmechanismus, hineinragt. Durch Betätigung des Hebelelements 2, insbesondere Drehen dieses entgegen der Federkraft eines das Hebelelement 2 haltenden Federelements 8, dreht sich das Führungselement 3 mit, wodurch das Verbindungselement 7 bewegt und die Verriegelung der Längsverstellung freigegeben wird. Eine Verstellung des Fahrzeugsitzes ist nun möglich.

Mit Loslassen des Hebelelements 2 wird dieses zusammen mit dem Führungselement 3 und dem Verbindungselement 7 aufgrund der Federkraft des Federelements 8 wieder in seine Ausgangsposition zurückbewegt, so dass der Verstellmechanismus wieder verriegelt ist. Hierzu ist das Federelement 8 bevorzugt als Rückholfeder ausgeführt.

Darüber hinaus kann es durch Betätigung des Hebelelements 2 und daraus resultierend durch die Bewegung des Führungselements 3 infolge von Reibung, insbesondere Gleitreibung des Führungselements 3 an der Trägerschiene 1 zu einer Geräuschentwicklung kommen, die unerwünscht ist.

Zumindest zur Reduzierung einer solchen Geräuschentwicklung ist das Führungselement 3 auf einer der Trägerschiene 1 zugewandten Seite mit einer profilierten Fase 4 versehen. Im Ausführungsbeispiel ist die profilierte Fase 4 mit einem als Wellenprofil 5 ausgebildeten Profil versehen, um die Auflagefläche zwischen dem Führungselement 3 und der Trägerschiene 1 zu reduzieren. Die Fase 4 kann auch mit einem anderen Profil, welches die Auflagefläche reduziert, versehen werden.

In einer vorteilhaften Weiterbildung der Erfindung ist das Führungselement 3 aus einem Material oder Materialien gefertigt oder mit einem solchen Material oder Materialien beschichtet, die zur Gruppe der thermoplastischen Elastomere zählen, insbesondere solchen, die ausgewählt sind aus der Gruppe bestehend aus Copolyester Elastomeren (COPE) (z.B. Arnitel™ (DSM), Skypel™ (SK Chemical), Keyflex BT™ (LG Chemical), thermoplastischen Elastomeren auf Urethanbasis (TPE-U) (z. B, Skythane™ oder Estane™), vernetzten thermoplastischen Elastomeren auf Olefinbasis (TPE-V) (z.B. Sarlink™ (DSM)) und Styrol-Blockcopolymeren (TPE-S) (z.B. MultiFlex™ (Multibase)), besonders bevorzugt Arnitel™ (DSM), Skypel™ (SK Chemical), Keyflex BT™ (LG Chemical), Skythane™, Estane™, oder Sarlink™ (DSM)). Alternativ sind auch dem Fachmann geläufige Materialien mit ähnlichen physikalisch-chemischen Eigenschaften einsetzbar oder z.B. solche auf natürlicher Kautschukbasis.

### Bezugszeichenliste

- 1: Trägerschiene
- 2: Hebelelement
- 3: Führungselement
- 4: profilierte Fase
- 5: Wellenprofil
- 6: Aussparungen
- 7: Verbindungselement
- 8: Federelement

## Patentansprüche

1. Verstellvorrichtung für einen Fahrzeugsitz mit einem Führungselement (3) zur Führung eines Hebelelements (2), wobei das Führungselement (3) mit einer Trägerschiene (1) in Kontakt steht, wobei zumindest ein Kontaktbereich des Führungselementes (3) zumindest teilweise eine profilierte Fase (4) aufweist,
**dadurch gekennzeichnet, dass** die profilierte Fase (4) mit einem Wellenprofil (5) versehen ist.

2. Verstellvorrichtung nach Anspruch 1,
**dadurch gekennzeichnet, dass** der Kontaktbereich an einer der Trägerschiene (1) zugewandten Seite des Führungselements (3) ausgebildet ist.

3. Verstellvorrichtung nach einem der vorhergehenden Ansprüche,
**dadurch gekennzeichnet, dass** der Kontaktbereich an einem Rand einer Aussparung (6) des Führungselements (3) ausgebildet ist.

4. Verstellvorrichtung nach einem der vorhergehenden Ansprüche,
**dadurch gekennzeichnet, dass** das Führungselement (3) aus einem thermoplastischen Elastomer gefertigt ist, insbesondere einem thermoplastischen Elastomer ausgewählt aus der Gruppe bestehend aus Copolyester Elastomeren (COPE), thermoplastischen Elastomeren auf Urethanbasis (TPE-U), vernetzten thermoplastischen Elastomeren auf Olefinbasis (TPE-V) und Styrol-Blockcopolymeren (TPE-S).

5. Fahrzeugsitz mit mindestens einer Verstellvorrichtung nach einem der Ansprüche 1 bis 4 zur dessen Längsverstellung.

## Claims

1. Adjusting device for a vehicle seat, comprising a guide element (3) for guiding a lever element (2), wherein the guide element (3) is in contact with a carrier rail (1), wherein at least one contact region of the guide element (3) at least partially comprises a profiled chamfer (4), **characterized in that** the profiled chamfer (4) is provided with a wave-shaped profile (5).

2. Adjusting device according to Claim 1, **characterized in that** the contact region is formed on a side of the guide element (3) facing the carrier rail (1).

3. Adjusting device according to one of the preceding claims, **characterized in that** the contact region is formed on an edge of a recess (6) of the guide element (3).

4. Adjusting device according to one of the preceding claims, **characterized in that** the guide element (3) is manufactured from a thermoplastic elastomer, in particular a thermoplastic elastomer selected from the group consisting of copolyester elastomers (COPE), urethane-based thermoplastic elastomers (TPE-U), cross-linked olefin-based thermoplastic elastomers (TPE-V) and styrene block copolymers (TPE-S).

5. Vehicle seat comprising at least one adjusting device according to one of Claims 1 to 4 for the longitudinal adjustment thereof.

## Revendications

1. Dispositif de réglage pour un siège de véhicule, comprenant un élément de guidage (3) pour le guidage d'un élément de levier (2), l'élément de guidage (3) étant en contact avec un rail de support (1), au moins une région de contact de l'élément de guidage (3) comprenant au moins partiellement un chanfrein profilé (4), **caractérisé en ce que** le chanfrein profilé (4) est pourvu d'un profil ondulé (5).

2. Dispositif de réglage selon la revendication 1, **caractérisé en ce que** la région de contact est réalisée sur un côté de l'élément de guidage (3) tourné vers le rail de support (1).

3. Dispositif de réglage selon l'une quelconque des revendications précédentes,
**caractérisé en ce que** la région de contact est réalisée sur un bord d'un évidement (6) de l'élément de guidage (3).

4. Dispositif de réglage selon l'une quelconque des revendications précédentes,
**caractérisé en ce que** l'élément de guidage (3) est fabriqué à partir d'un élastomère thermoplastique, en particulier d'un élastomère thermoplastique choisi dans le groupe constitué d'élastomères de copolyester (COPE), d'élastomères thermoplastiques à base d'uréthane (TPE-U), d'élastomères thermoplastiques oléfiniques réticulés (TPE-V) et de copolymères blocs styréniques (TPE-S).

5. Siège de véhicule comprenant au moins un dispositif de réglage selon l'une quelconque des revendications 1 à 4 pour son réglage en longueur.
